(19) Europäisches Patentamt

European Patent Office

Office européen des brevets

(11) Veröffentlichungsnummer: **0 447 597 B1**

## (12) EUROPÄISCHE PATENTSCHRIFT

(45) Veröffentlichungstag der Patentschrift: **22.02.95**

(21) Anmeldenummer: **90105583.0**

(22) Anmeldetag: **23.03.90**

(51) Int. Cl.6: **G01P 5/00**

(54) **Verfahren und Vorrichtung zur Vermeidung von Mehrdeutigkeiten bei einem Pulsdopplergerät.**

(43) Veröffentlichungstag der Anmeldung:
**25.09.91 Patentblatt  91/39**

(45) Bekanntmachung des Hinweises auf die
Patenterteilung:
**22.02.95 Patentblatt  95/08**

(84) Benannte Vertragsstaaten:
**AT CH DE FR GB LI NL**

(56) Entgegenhaltungen:
**EP-A- 0 161 956**
**EP-A- 0 212 527**
**EP-A- 0 338 592**
**US-A- 4 800 891**

(73) Patentinhaber: **SIEMENS AKTIENGESELL-
SCHAFT
Wittelsbacherplatz 2
D-80333 München (DE)**

(72) Erfinder: **Hassler, Dietrich, Dipl.-Ing.
Flurweg 3
D-8525 Uttenreuth (DE)**

EP 0 447 597 B1

**Beschreibung**

Die Erfindung betrifft ein Verfahren zur Vermeidung von Mehrdeutigkeiten bei einem Pulsdopplergerät, bei dem

- periodisch mit einer Pulswiederholzeit Sendeimpulse in ein Gebiet mit bewegten Teilchen gesendet werden,
- die empfangenen Echosignale aus diesem Gebiet in ihre Quadraturkomponenten zerlegt werden,
- die Quadraturkomponenten so tiefpaßgefiltert werden, daß sie nur noch das Spektrum einer Pulseinhüllenden der Echosignale enthalten,
- die tiefpaßgefilterten Quadratursignale nach einer Digitalisierung digital weiterverarbeitet werden,
- von einer der Quadraturkomponenten der Echosignale die Autokorrelationsfunktion und von beiden Quadraturkomponenten eine Kreuzkorrelationsfunktion an der Stelle der Verschiebung um die Pulswiederholzeit gebildet wird,
- aus den Korrelationsfunktionswerten an der Stelle der Verschiebung um die Pulswiederholzeit die mehrdeutige mittlere Doppler-Kreisfrequenz als Maß für die mittlere Geschwindigkeit der bewegten Teilchen bestimmt wird.

Die Erfindung bezieht sich ebenfalls auf eine Vorrichtung zur Durchführung des eingangs genannten Verfahrens mit

- einem Sender, der periodisch mit einer Pulswiederholzeit Sendeimpulse in ein Gebiet mit bewegten Teilchen sendet,
- einem Empfänger mit einem Demodulator, der die empfangenen Echosignale aus diesem Gebiet in ihre Quadraturkomponenten zerlegt,
- zwei Tiefpaßfilter, die mit dem Demodulator verbunden sind und die die Quadraturkomponenten so filtern, daß sie nur noch das Spektrum der Pulseinhüllenden enthalten, so daß die Sendefrequenz und höhere Harmonische davon unterdrückt sind,
- zwei mit den Tiefpässen verbundenen Analog-Digital-Wandlern, die die tiefpaßgefilterten Quadraturkomponenten digitalisieren,
- zwei mit den Analog-Digital-Wandlern verbundenen Filtern, die die digitalisierten Quadratursignale von den Festzielechos befreien,
- zwei mit den Tiefpaßfiltern verbundenen Bereichstoren, die Signalausschnitte der Ausgangssignale der Filter auf parallele Verarbeitungskanäle verteilen, wobei die Signalausschnitte Signaleinzugsgebieten im Gebiet mit bewegten Teilchen entsprechen.

Bei Pulsdopplergeräten darf die Doppler-Frequenzverschiebung nicht größer als die halbe Pulswiederholfrequenz werden, wenn Mehrdeutigkeiten der Mittenfrequenz- bzw. Geschwindigkeitsmessung vermieden werden sollen. Dies stellt angesichts der praktisch erforderlichen Meßbereiche insbesondere in der Kardiologie eine erst zu nehmende Problematik der Pulsdopplertechnik dar. Hohe im Herzen physiologisch vorkommende Strömungsgeschwindigkeiten können nicht von niedrigeren unterschieden werden. Dies um so mehr, je tiefer die Strömung im Körper liegt.

Bei schmalen Dopplerspektren und nur einer gleichzeitig vorhandenen Strömungsrichtung kann gemäß der US-PS 4 680 739 der Bereich darüber hinaus erweitert werden, in dem die Bedingungen für stetigen Verlauf der Mittenfrequenz mit der Zeit ausgenutzt wird. Dies setzt allerdings voraus, daß ein Anfangswert bekannt ist.

Ein Verfahren und eine Vorrichtung der eingangs genannten Art, bei dem die mittlere Dopplerfrequenz und die Bandbreite aus den Korrelationsfunktionen aufeinanderfolgender Echos bestimmt wird, ist aus der US-PS 4 800 891 bekannt. Die dort verwendete Arcus-Tangens-Funktion ist bereits ab +/- 90° entsprechend einem Viertel der Pulswiederholzeit mehrdeutig. Nutzt man die Information aus, die in der Entstehung des Vorzeichens des Quotienten aus Zähler- und Nenner-Vorzeichen liegt, dann kann die Eindeutigkeit bis +/- 180° ausgedehnt werden.

Eine andere Methode zur Bestimmung der mittleren Strömungsgeschwindigkeit ist in dem Artikel von O. Bonnefous und P. Pesqué mit dem Titel: "Time Domain Formulation of Pulse-Doppler Ultrasound and Blood Velocity Estimation by Cross Correlation", erschienen in Ultrasonic Imaging 8, pp. 73-85 (1986), angegeben. Dort wird die Zeitverschiebung undemodulierter Echosignale aufeinander folgender Sendeimpulse durch Auswertung der Korrelationsfunktion bestimmt und daraus direkt auf die Strömungsgeschwindigkeit geschlossen. Ein Dopplerspektrum wird jedoch nicht gewonnen. Es kann, ein schmales Dopplerspektrum vorausgesetzt, die mittlere Geschwindigkeitskomponente in Schallrichtung und damit die Mittenfrequenz des Spektrums zwar mit geringer Genauigkeit, aber ohne Bereichseinschränkung, d.h. eindeutig, bestimmt werden. Soll jedoch die Bandbreite des Spektrums oder weitergehende Eigenschaften der Strömung bestimmt werden, so setzt das eine hohe Genauigkeit der Zeitmessung und lange Meßzeiten voraus. Daher stößt eine Analyse der Strömung bei den realisierbaren Sendeimpulslängen und Laufzeitenmessungen auf praktische Schwierigkeiten. Außerdem erfordert die Bildung der Korrelationsfunktion eine Digitalisierung der undemodulierten hochfrequenten Echo-Signale, die wegen der hohen Dynamikforderung durch die gleichzeitig auftretenden Festzielechos schwer realisierbar ist.

Der Erfindung liegt daher die Aufgabe zugrunde, ein Verfahren und eine Vorrichtung anzugeben, mit dem die Dopplerfrequenzverschiebung von bewegten Teilchen einfach und genau bestimmt werden kann.

Die Aufgabe wird bezüglich des eingangs genannten Verfahrens dadurch gelöst, daß zusätzlich die Autokorrelationsfunktion einer der Quadraturkomponenten und eine Kreuzkorrelationsfunktion der beiden Quadraturkomponenten in einer Umgebung der Pulswiederholzeit gebildet werden, wobei die Umgebung mindestens die doppelte Impulslaufzeit umfaßt, die ein Impuls benötigt, um die Strecke zu durchlaufen, die von einem Teilchen mit der zu messenden Maximalgeschwindigkeit zurückgelegt wird, daß die Verschiebung des Maximums einer oder beider Korrelationsfunktionen in Bezug auf die Pulswiederholzeit bestimmt wird, daß aus der Verschiebung des Maximums ein Frequenzbereich für die mittlere Dopplerfrequenz festgelegt wird und daß derjenige Wert von der mehrdeutigen mittleren Dopplerfrequenz ausgewählt und einer weiteren Signalverarbeitung zugeführt wird, der in dem Frequenzbereich liegt, der durch die Verschiebung des Maximums vorgegeben ist.

Die Aufgabe wird bezüglich der eingangs genannten Vorrichtung dadurch gelöst, daß

- jede Doppler-Auswertungsschaltung zwei Korrelierer umfaßt, die die Autokorrelationsfunktion einer der Quadraturkomponenten und eine Kreuzkorrelationsfunktion der beiden Quadraturkomponenten in einer Umgebung der Verschiebung um die Pulswiederholzeit bestimmen, wobei die Umgebung mindestens die doppelte Impulslaufzeit umfaßt, die ein Impuls benötigt, um die Strecke zu durchlaufen, die von einem Teilchen mit der zu messenden Maximalgeschwindigkeit zurückgelegt wird, daß
- die Korrelierer jeweils mit einem Mittelwertbildner verbunden sind, die der Korrelationsfunktionen mehrerer Sendeimpulse mittelt, daß
- die Mittelwertbildner jeweils mit einer Auswahlschaltung verbunden sind, die von den gemittelten Korrelationsfunktionen den Wert an der Stelle der Verschiebung um die Pulswiederholzeit auswählen, daß
- jeweils eine Verschiebungsbestimmungsschaltung mit den Mittelwertbildnern verbunden ist, die die Verschiebung des Maximums einer oder beider Korrelationsfunktionen gegenüber der Pulswiederholzeit bestimmt, und daß
- eine Bereichsbestimmungsschaltung mit der Verschiebungsbestimmungsschaltung verbunden ist, die aus der Verschiebung des Maximums den Bereich festlegt, innerhalb dessen ein Wert der aus den Signalen der Auswahlschaltung bestimmten Vielzahl von möglichen Werten der mittleren Dopplerkreisfrequenz liegt, wobei der so bestimmte Wert der weiteren Signalverarbeitung zugeführt wird.

Die Messung der Zeitverschiebung des Maximums der Korrelationsfunktion wird bei gegenüber dem Stand der Technik reduzierter Genauigkeitsforderung an die Zeiterfassung verwendet, um Mehrdeutigkeiten der Pulsdopplertechnik zu beseitigen. Gleichzeitig bleibt die Auswertung des Spektrums möglich, so daß auf keine Information verzichtet werden muß wie bei der direkten Mittenfrequenzbestimmung aus der Zeitverschiebungsmessung nach O. Bonnefous und P. Pesqué. Die Genauigkeit bleibt auf dem bisherigen Stand. Die Genauigkeitsforderung an die zusätzliche Bestimmung der Verschiebung des Maximums der Korrelationsfunktion ist durch die Kombination mit der bekannten Technik auf ein realisierbares Maß herabgesetzt.

Eine vorteilhafte Ausgestaltung zeichnet sich dadurch aus, daß die Verschiebung des Maximums derjenigen Korrelationsfunktion bestimmt wird, deren Funktionswert an der Stelle der Verschiebung um die Pulswiederholzeit am größten ist. Dadurch ist sichergestellt, daß stets ausreichend hohe Signalpegel verarbeitet werden. Die Genauigkeit der Bestimmung der Zeitverschiebung ist erhöht, da die Amplituden der Korrelationsfunktionen in Abhängigkeit der Geschwindigkeit des zu messenden Mediums schwanken.

Eine weitere vorteilhafte Ausgestaltung zeichnet sich dadurch aus, daß die Verschiebung des Maximums aus der Summe der Absolutwerte der beiden Korrelationsfunktionen bestimmt wird. Durch diese Maßnahme wird die Genauigkeit bei der Bestimmung der Zeitverschiebung ohne die amplitudengrößte Korrelationsfunktion auszuwählen.

Eine besonders vorteilhafte Ausgestaltung zeichnet sich dadurch aus, daß die Echosignale so breitbandig in ihre Quadraturkomponenten zerlegt werden, daß das Spektrum der Echosignale der einzelnen Sendeimpulse im wesentlichen erhalten bleibt. Dadurch ist es möglich, das demodulierte Signal mit relativ langsamen Analog-Digital-Wandlern mit hoher Dynamik (Bit-Tiefe) genügend genau zu digitalisieren.

Eine weitere vorteilhafte Ausgestaltung zeichnet sich dadurch aus, daß die digitalisierten Quadratursignale von den Festzielechos befreit werden. Die Unterdrückung der Festzielechos läßt sich digital gut realisieren. An die Dynamik der nachfolgenden Signalverarbeitungsschaltung werden nach Beseitigung der Festzielechos geringere Anforderungen gestellt.

Eine weitere Ausgestaltung zeichnet sich dadurch aus, daß die von den Festzielechos befreiten Quadratursignale in einer Anzahl von hintereinanderliegenden Zeitbereichen eingeteilt werden, die einer Anzahl von Signaleinzugsgebieten entsprechen, wobei die einzelnen Signalausschnitte in parallelen Kanälen weiterverarbeitet werden. Dadurch ist es möglich, die Geschwindigkeitsverteilung entlang der Abtastrichtung zu bestimmen. Die Geschwindigkeitsverteilung entlang einer Abtasteinrichtung ist die Basis der Darstellung der Strömungsverteilung in einer Schnittebene (flow-imaging).

Zwei Ausführungsbeispiele der Erfindung werden nun anhand von 16 Figuren erläutert. Es zeigen:

FIG 1     ein Blockschaltbild eines medizinischen Pulsdoppler-Bildgerätes;

FIG 2     ein Blockschaltbild einer ersten Doppler-Auswertungsschaltung mit einem Umschalter zur Auswahl der zur Auswertung vorgesehenen Korrelationsfunktion;

FIG 3     ein Blockschaltbild einer zweiten Doppler-Auswerteschaltung mit einer Additionsschaltung, die die Summe von der Autokorrelations- und der Kreuzkorrelationsfunktion zur Auswertung liefert;

FIG 4     ein Zeitdiagramm von zwei aufeinanderfolgenden idealisierten Echosignalen;

FIG 5     ein Zeitdiagramm eines um die Pulswiederholzeit verschobenen Echosignals;

FIG 6     die Korrelationsfunktion der Echosignale von zwei aufeinanderfolgenden Sendeimpulsen;

FIG 7     ein Zeitdiagramm eines sinusförmigen Oszillatorsignals zum Demodulieren der Echosignale;

FIG 8     ein Zeitdiagramm eines cosinusförmigen Oszillatorsignals zum Demodulieren der Echosignale;

FIG 9     ein Zeitdiagramm eines mit dem sinusförmigen Oszillatorsignal gemischten Echosignals (Quadratur-Komponente des Echosignals);

FIG 10    ein Zeitdiagramm eines mit dem cosinusförmigen Oszillatorsignal gemischten Echosignals (Imphase-Komponente des Echosignals);

FIG 11    ein Zeitdiagramm der um die Pulswiederholzeit verschobenen Quadratur-Komponente des Echosignals des ersten Sendeimpulses;

FIG 12    ein Zeitdiagramm der um die Pulswiederholzeit verschobenen Inphase-Komponente des Echosignals des ersten Sendeimpulses;

FIG 13    die Autokorrelationsfunktion der ungefilterten Quadratur-Komponente;

FIG 14    die Autokorrelationsfunktion der ungefilterten Inphase-Komponente;

FIG 15    die Kreuzkorrelationsfunktion der um die Pulswiederholzeit verschobenen ungefilterten Quadratur-Komponente mit der nicht verschobenen ungefilterten Inphase-Komponente und

FIG 16    die Kreuzkorrelationsfunktion der um die Pulswiederholzeit verschobene ungefilteren Inphase-Komponente mit der nicht verschobenen ungefilterten Quadratur-Komponente.

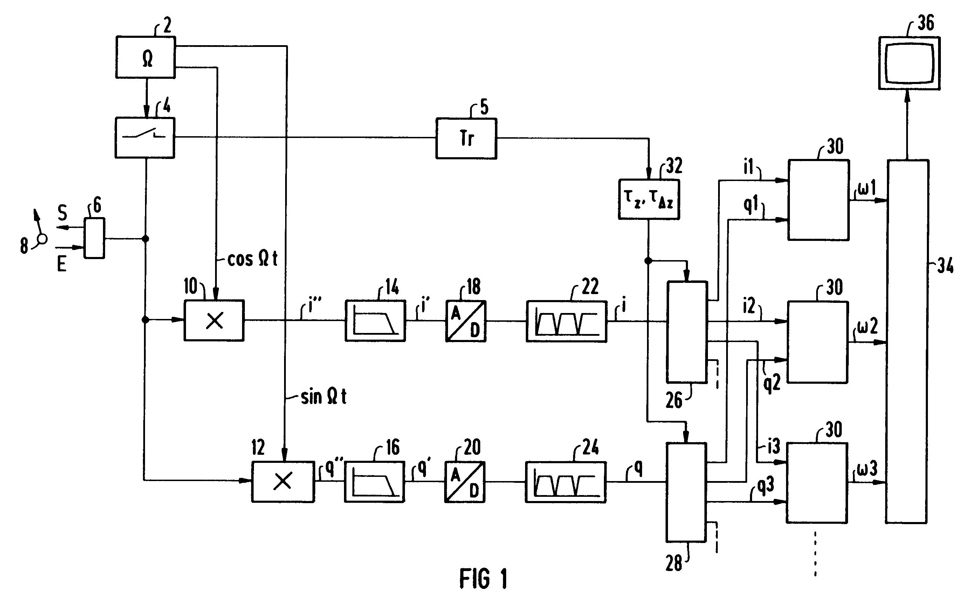

FIG 1 zeigt ein Blockschaltbild eines medizinischen Pulsdoppler-Bildgerätes, mit dem die Geschwindigkeitsverteilung in einer Schnittebene eines Untersuchungsobjektes dargestellt werden kann (flow imaging). Ein Lokaloszillator 2 liefert mit einer Kreisfrequenz $\Omega$ ein Cosinus-Signal, aus dem ein Tor 4 mit einer Wiederholzeit Tr von z.B. 200 $\mu$s periodisch kurze Sendeimpulse von wenigen Schwingungsperioden herausschneidet. Die Wiederholzeit Tr ist in FIG 1 durch den Block 5 verdeutlicht. Ein Wandler 6 wandelt die elektrischen Sendeimpulse in Ultraschallimpulse um, die in vorgebbaren Richtungen abgestrahlt werden. Bei dem Wandler 6 kann es sich sowohl um einen einzelnen Ultraschallwandler als auch um ein Ultraschallwandlerarray mit in Reihe angeordneten Elementarwandlern handeln.

Nach jedem Aussenden empfängt der Wandler 6 die von Grenzflächen und bewegten Teilchen 8 z.B. in einer Blutströmung reflektierten Ultraschallsignale und wandelt sie in elektrische Signale um. Diese Echosignale werden jeweils zwei Mischern 10 und 12 zugeführt. Im Mischer 10 werden die Echosignale mit dem Cosinus-Signal des Lokaloszillators 2 und im Mischer 12 mit dem Sinus-Signal des Lokaloszillators 2 breitbandig multipliziert. Die Ausgänge der Mischer 10 und 12 sind mit zwei Demodulationstiefpässen 14 bzw. 16 verbunden. Am Ausgang des Demodulationstiefpasses 14 steht die Inphase-Komponente i' und am Ausgang des Demodulationstiefpasses 16 steht die Quadratur-Komponente q' der komplexen Hüllkurve des Echosignals zur Verfügung. Die Demodulationstiefpässe lassen das Spektrum der Pulseinhüllenden passieren, unterdrücken aber die Sendefrequenz und höhere Harmonische davon. Sie stellen gleichzeitig die Anti-Aliasing-Filter für die folgende Analog-Digital-Wandlung dar.

Die beiden Quadraturkomponenten i' und q' werden ab hier digital weiterverarbeitet. Dazu werden sie jeweils einem Analog-Digital-Wandler 18 bzw. 20 zugeführt. Die Quadraturkomponenten i' und q' werden hier mit 6 MHz bei einem 12 bit-wertigem Ausgangssignal digitalisiert. Die digitalen Ausgänge der Analog-Digital-Wandler 18 und 20 sind jeweils mit einem Eingang eines digitalen Kammfilters 22 bzw. 24 verbunden. Die Kammfilter 22 und 24 enthalten Sperrstellen im Abstand der Pulswiederholfrequenz 1/Tr. Solche Filter lassen sich digital relativ elegant realisieren (stationary canceller), indem im einfachsten Fall die Echosignale zweier aufeinanderfolgender Sendeimpulse voneinander subtrahiert werden. Es verbleiben nur noch die Änderungssignale. Erfahrungsgemäß sind allerdings Filter höheren Grades erforderlich, damit Echosignale langsam bewegter Grenzfläche, z.B. Aderwanderung, schärfer von den Signalen der Blutströmung unterschieden werden können. Mit anderen Worten: die digitalisierten Quadratur-Komponenten i' und q' werden durch die Kammfilter 22 bzw. 24 von den Signalen der unbewegten Festziele gereinigt, so daß hinter den Kammfiltern 22 und 24 nur die gepulsten Quadratur-Dopplersignale i und q der Bewegziele anstehen.

Nachdem das gepulste Dopplersignal ohne Informationsverluste in der Niederfrequenz-Lage vorliegt, werden nun sowohl die Inphase-Komponente i als auch die Quadratur-Komponente q jeweils einem Bereichstor 26 bzw. 28 zugeführt. Die Bereichstore 26 und 28 verteilen die einer bestimmten Tiefenlage entsprechenden Signalausschnitte auf jeweils eine Doppler-Auswertungsschaltung 30. Die Anzahl der parallel angeordneten Doppler-Auswerteschaltungen 30 entspricht somit der Anzahl der Tiefenbereiche. Die Doopler-Auswertungsschaltungen 30 bestimmen aus den Quadraturkomponenten aus einem Tiefenbereich $\Delta z$ die mittlere Dopplerkreisfrequenz der bewegten Teilchen in diesen Tiefenbereich, z. B. in i1 und q1 die mittlere Dopplerkreisfrequenz $\omega 1$.

In FIG 1 sind die Signalausschnitte für die erste Tiefenlage mit i1 und q1 für die zweite Tiefenlage i2 und q2 und für die dritte Tiefenlage i3 und q3 bezeichnet. Daran können sich weitere Tiefenbereiche anschließen, jedoch sind hier aus Gründen der Übersichtlichkeit nur drei Doppler-Auswerteschaltungen 30 gezeichnet. Die Tiefenlagen der Signaleinzugsgebiete sind unter Zugrundelegung einer bekannten Schallgeschwindigkeit durch die Verzögerung $\tau_z$ und die Öffnungsdauer $\tau_{\Delta z}$ der Bereichstore 26 und 28 bestimmt, was durch den Block 32 veranschaulicht ist. Die Werte für die mittlere Dopplerkreisfrequenz $\omega 1$, $\omega 2$... an den Ausgängen der Doppler-Auswertungsschaltungen 30 werden nun entsprechend der Tiefenlage in einer Videosignalschaltung 34 so verarbeitet, daß sie auf einem Bildschirm 36 als Strömungsbild in einer Schnittebene dargestellt werden können.

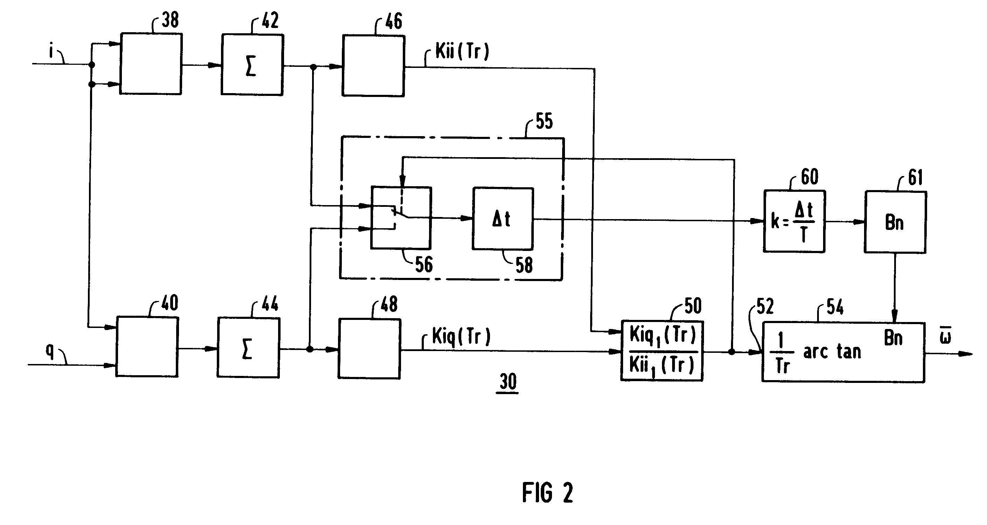

FIG 2 zeigt nun eine erste Doppler-Auswertungsschaltung 30 im einzelnen. Auf die Kennzeichnung der Tiefenbereichszuordnung ist hier verzichtet, weil die Signalverarbeitung für alle Tiefenbereiche identisch ist. Die einem Tiefenbereich entsprechende Inphase-Komponente i wird einem Korrelierer 38 zugeführt. Der Korrelierer 38 bildet die Autokorrelationsfunktion Kii (Tr + t) der Inphase-Komponente i der Echosignale zweier aufeinander folgender Sendeimpulse in einer Umgebung der Pulswiederholzeit Tr, z.B. eineinhalbfache Periodendauer T der Sendefrequenz, also Tr +/- 1,5T. Die Umgebung zur Bildung der Korrelationsfunktion ist begrenzt duch mindestens die doppelte Impulslaufzeit, die ein Impuls benötigt, um die Strecke zu durchlaufen, die von einem Teilchen zurückgelegt wird, dessen Geschwindigkeit der zu messenden Maximalgeschwindigkeit entspricht.

Außerdem wird die Inphase-Komponente i und die Quadratur-Komponente q eines Signaleinzugsgebiets einem weiteren Korrelierer 40 zugeführt. Der Korrelierer 40 bildet die Kreuzkorrelationsfunktion Kiq(Tr + t) der Inphase-Komponente i und der Quadratur-Komponete q der Echosignale zweiter aufeinanderfolgender Sendeimpulse in einer Umgebung der Pulswiederholzeit. Die Umgebung ist hier genauso definiert wie die Umgebung der Autokorrelationsfunktion.

Die Ausgänge der Korrelierer 38 und 40 sind jeweils mit einem Mittelwertbildner 42 bzw. 44 verbunden. Die Mittelwertbildner 42 und 44 mitteln die Korrelationsfunktionen von 5 bis 10 aufeinanderfolgenden Sendeschüssen.

Die Mittelwertbildner 42 und 44 sind als Summierer ausgebildet. Jedoch wird hier die Summe nicht durch die Anzahl der zur Mittelung herangezogene Werte geteilt wird. Ihre Ausgänge sind jeweils mit einer Auswahlschaltung 46 bzw. 48 verbunden. Die Auswahlschaltungen 46 und 48 wählen jeweils aus den Korrelationsfunktionen Kii bzw. Kiq des Umgebungsbereichs den Wert an der Stelle der Pulswiederholzeit Tr aus. Beide ausgewählte Werte werden einem Dividierer 50 zugeführt. Der Dividierer 50 bildet den Quotienten aus Kreuzkorrelationsfunktion Kiq (Tr) und der Autokorrelationsfunktion Kii (Tr). Der Ausgang des Dividierers 50 ist mit einem Eingang 52 einer Arcustangens-Funktionsschaltung 54 verbunden. Damit sind durch die Arcustangens-Funktionsschaltung 54 alle möglichen Werte der mittleren Dopplerkreisfrequenz $\overline{\omega}$ multipliziert mit der Pulswiederholzeit Tr festgelegt.

Die Auswahl des für den Meßort tatsächlich gültigen Wertes der Dopplerfrequenzverschiebung erfolgt in der im folgenden beschriebenen Teilschaltung.

Die gemittelten Korrelationsfunktionswerte Kii und Kiq der Mittelwertbilder 42 und 44 werden einer Verschiebungsbestimmungsschaltung zugeführt, die einen Umschalter 56 umfaßt. Der Umschalter 56 wird in Abhängigkeit des Quotienten aus dem Dividierer 50 so gesteuert, daß jeweils von der Korrelationsfunktion mit den größeren Werten die Verschiebung des Maximums bestimmt wird. Ist der Quotient größer als eins, das heißt die Kreuzkorrelationsfunktion Kiq ist größer als die Autokorrelationsfunktion Kii, dann wird die Kreuzkorrelationsfunktion Kiq auf die Lage ihres Maximums untersucht. Andererseits wird, wenn der Quotient kleiner als eins ist, die Autokorrelationsfunktion Kii auf die Lage ihres Maximums untersucht. Der Umschalter 56 gibt den entsprechend ausgewählten Wert an eine Maximumbestimmungsschaltung 58 weiter. Die Verschiebung des Maximums kann gefunden werden, indem durch Vergleich aller Abtastwerte der ausgewählten Korrelationsfunktion Kii oder Kiq mittels Digitalrechner das Maximum der Funktion aufgesucht und die dazugehörige Zeitverschiebung gegenüber der Pulswiederholzeit Tr bestimmt wird. Anstelle der systematischen Suche nach dem Maximum unter allen Abtastwerten kann auch die Nullstelle der Ableitung der Funktion aufgesucht werden, wobei Minima auszuschließen sind. Eine weitere Möglichkeit, die als Integralmethode Meßfehler ausgleichen kann, ist als "Schwerpunktsformel" bekannt. Danach ergibt sich die Zeitverschiebung Δt des Maximums aus

$$\Delta t = \frac{\int_{-TB}^{TB} t\, Kii\,(Tr+t)\,dt}{\int_{-TB}^{TB} Kii\,(Tr+t)\,dt} \cdot$$

Sie berücksichtigt den ganzen Kurvenverlauf. Der Bereich TB, in dem die Korrelationsfunktion ermittelt wird, muß bei der Anwendung der Schwerpunktsformel allerdings größer als bei den obigen anderen Verfahren gewählt werden.

Aus der Verschiebung Δt des Maximums der Korrelationsfunktion Kii oder Kiq wird die relative Verschiebung in Bezug auf die Periodendauer der Sendefrequenz T in einem Dividierer 60 gebildet. Diese im Dividierer 60 gebildete Maßzahl k gibt nach der folgenden Tabelle die Bereiche Bn für die bisher mehrdeutig bestimmte Doppler-Kreisfrequenz $\overline{\omega}$ an.

| Bereich der Meßzahl k | Bereich des Arcustangens (Bereich der Dopplerfrequenz) |
|---|---|
| $-\frac{1}{4} < k < \frac{1}{4}$ | $-90° < \omega Tr < 90°$ |
| $\frac{1}{4} < k < \frac{3}{4}$ | $90° < \omega Tr < 270°$ |
| $\frac{3}{4} < k < \frac{5}{4}$ | $270° < \omega Tr < 450°$ |
| $-\frac{3}{4} < k < -\frac{1}{4}$ | $-270° < \omega Tr < -90°$ |
| $-\frac{5}{4} < k < -\frac{3}{4}$ | $-450° < \omega Tr < -270°$ |

Die Dopplerkreisfrequenz ω ergibt sich aus der Division des Arcustangens-Wertes durch die Pulswiederholzeit Tr.

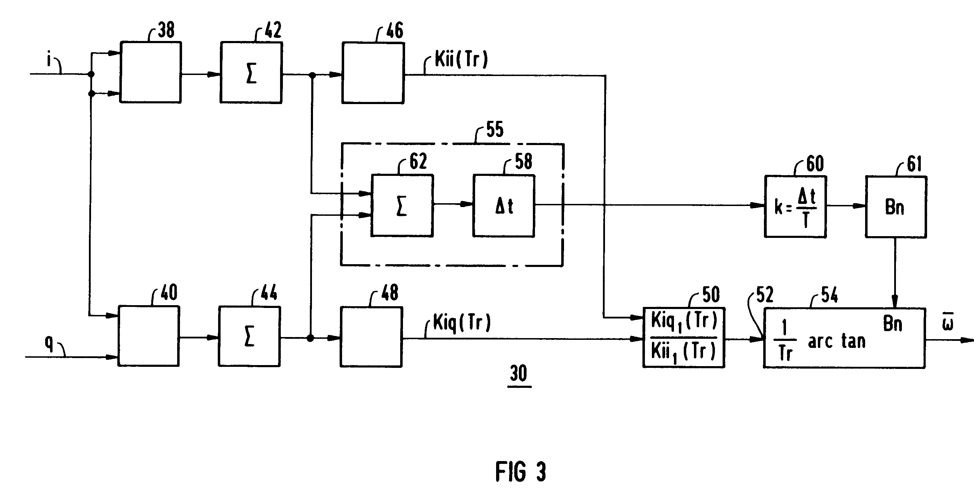

Die in FIG 3 dargestellte Doppler-Auswertungsschaltung 30 unterscheidet sich von der in FIG 2 dargestellten Doppler-Auswertungsschaltung 30 dadurch, daß der Umschalter in FIG 2 durch eine Additionsschaltung 62 ersetzt ist. Der Additionsschaltung 62 wird sowohl die Autokorrelationsfunktion Kii(Tr + t) vom Mittelwertbildner 42 als auch die Kreuzkorrelationsfunktion Kiq(Tr + t) vom Mittelwertbildner 44 zugeführt. Die Summe beider Korrelationsfunktionen Kii(Tr + t) und Kiq(Tr + t) wird nun der Maximumbestimmungsschaltung 58 zur Bestimmung der Zeitverschiebung Δt zugeführt. Die Verwendung der Additionsschaltung vermeidet die Abfrage, welcher Wert der Korrelationsfunktion Kii(Tr) oder Kiq(Tr) an der Stelle der Verschiebung um die Pulswiederholzeit Tr am größten ist. Damit entfällt in der Doppler-Auswertungsschaltung 30 nach FIG 3 die in der Doppler-Auswertungsschaltung 30 nach FIG 2 notwendige Verbindung vom Ausgang des Dividierers 50 zum Steuereingang des Umschalters 56.

Diese Technik kann für das schnelle Doppler-Bildverfahren aufgrund der meßzeitbedingten Fehler nur für minimal sechzehn Auflösungszellen gemeinsam angewendet werden. Man erhält also nur eine eindeutige Aussage für den Mittelwert in einem Bildfeld von ca. 1 cm². In diesem kann man unter der Annahme, daß die Meßwertunterschiede nicht größer sind als der Mehrdeutigkeitsbereich, den Mittelwert aus den konventionell gewonnen Werten für alle Mehrdeutigkeitsbereiche bilden und die Mittelwerte so behandeln, wie bisher beschrieben, nämlich die kleinste Differenz des Arguments zu der Maßzahl k.

Im folgenden wird anhand von Signalverläufen die Funktion der Schaltung nach den FIG 1 bis 3 erläutert.

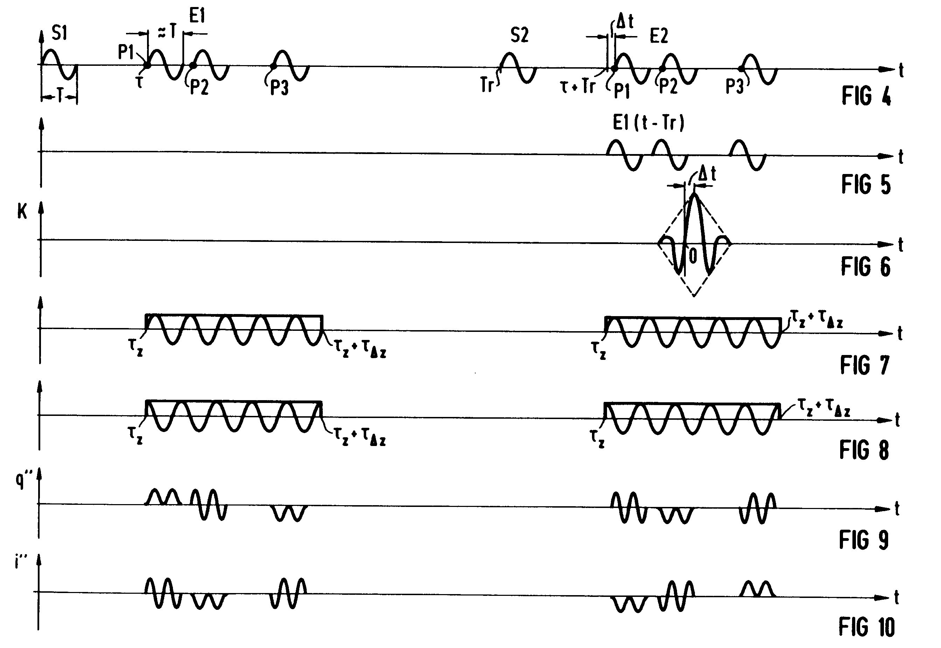

In FIG 4 sind Echosignale E1 und E2 als Reaktion auf zwei aufeinanderfolgende Sendeschüsse S1 und S2 von drei Punktreflektoren P1, P2, P3 im Zeitbereich veranschaulicht. Ein Sendesignal besteht aus einer Periode T einer Sinusschwingung im Abstand der Pulswiederholzeit Tr.

Die drei Reflektoren P1, P2, P3 in FIG 4 stehen stellvertretend für eine große Zahl von Blutteilchen eines Strömungsfadens, der eine Geschwindigkeitskomponente in Schallrichtung aufweist. Deren Echosignale überlagern sich in der Realität gegenseitig und diese Überlagerung ändert sich mit der Zeit, weil Teilchen laufend das Signaleinzugsgebiet verlassen und andere in neuer Lage zueinander eintreten. Die hier gezeigten drei Signale bleiben aus didaktischen Gründen getrennt sichtbar. Sie ändern ihre Zuordnung zueinander nicht, wie die überwiegende Mehrzahl der erfaßten Teilchen bei den physiologisch vorkommenden Geschwindigkeiten und den praktisch verwendeten Pulswiederholzeiten Tr. Die Abstände der Teilchen P1, P2 und P3 sind so gewählt, daß unterschiedliche Phasenlagen zur Sendefrequenz auftreten. Ein Teilchenwechsel mit der Zeit ist nicht dargestellt.

Wenn das Echo E1 des wandlernächsten Teilchens P1 auf den ersten Sendeimpuls S1 nach der Zeit $\tau$ nach dem ersten Sendepuls S1 beginnt, dann erreicht, wegen der Bewegung in Schallrichtung, als Reaktion auf den zweiten Sendepuls S2 das zweite Echo E2 des selben Teilchens P1 den Wandler nach der Zeit $\tau$ + $\Delta t$ nach dem zweiten Sendepuls S2. Die gleiche Verschiebung gilt für die Signale der anderen Punktreflektoren P2 und P3. In FIG 5 ist das erste Echosignal E1 um die Pulswiederholzeit Tr verschoben unter dem zweiten Echosignal E2 in FIG 4 dargestellt. Bildet man die Korrelation des zweiten Echosignals E2 mit dem so verschobenen ersten Echosignal E1, und berücksichtigt bei der Bildung der Korrelation nur Leistungsanteile von Signalen, die vom selben Teilchen stammen - also keine Kreuzleistung - , dann erhält man die Korrelationsfunktion nach FIG 6. Sie stellt bezüglich der Form die Autokorrelation des Sendesignals S1 oder S2 dar, sie ist allerdings um $\Delta t$ zeitverschoben.

Die Vernachlässigung der Leistungsanteile in der Korrelation, die zwischen Signalen unterschiedlicher Teilchen entsteht, d. h. die Kreuzleistung, geschieht mit folgender Begründung. Betrachtet man über längere Zeit - theoretisch unendlich lang - diese Art der Korrelation, dann werden die bisher berücksichtigten Leistungsanteile immer zu gleichen Korrelationsfunktionen führen und sich aufaddieren. Die Kreuzleistungen führen aber zu Korrelationsanteilen, die in statistisch schwankender Verschiebung auftreten, weil die räumliche Zuordnung der Teilchen langfristig veränderlich ist. Positive Anteile der Funktion werden durch die negativen wieder ausgelöscht. Wartet man also statt zweier viele Echosignale ab, und korreliert im Bereich der Zeitverschiebung Tr, dann erhält man die gezeigte Kurve nach FIG 6. Wegen der gegenseitigen Kompensation der Kreuzleistungsanteile erhält man dasselbe Ergebnis bei Mittelung vieler Korrelationsfunktionen, die aus nur zwei Signalen gebildet wurden. Das ist unmittelbar einsichtig, da es sich bei der Korrelation um eine Integration handelt, bei der das Produkt der Summe gleich der Summe der Produkte im Integranden ist. Die Kurven nach FIG 6 gilt also streng nicht für den dargestellten Einzelfall, sondern nur für den Grenzwert der Korrelation von vielen Echofolgen.

Bei den in den folgenden Figuren 7 bis 16 dargestellten Signalen ist aus Gründen der Vereinfachung die Funktion der Tiefpässe 14 und 16 der Kammfilter 22 und 24 in FIG 1 nicht berücksichtigt. Die Funktion der Bereichstore 26 und 28 in FIG 1 wird mit den Oszillatorsignalen verbunden, in dem gepulste Oszillatorsignale in den Figuren 7 und 8 dargestellt sind. Die Pulslänge der Oszillatorsignale erstreckt sich von $\tau_z$ bis $\tau_z$ + $\tau_{\Delta z}$. FIG 7 zeigt das sinusförmige und FIG 8 das cosinusförmige Oszillatorsignal des in FIG 1 dargestellten Oszillators 2.

Das ungefilterte Mischprodukt Echosignale E1 und E2 mit dem sinusförmigen Oszillatorsignal nach FIG 7 ist in FIG 9 dargestellt. Es ist mit q'' bezeichnet und ist das Ausgangssignal des in FIG 1 dargestellte Mischers 12.

Das ungefilterte Mischprodukt der Echosignale E1 und E2 mit den cosinunsförmigen Oszillatorsignal ist in FIG 10 dargestellt. Es ist mit i'' bezeichnet und tritt am Ausgang des in FIG 1 gezeigten Mischers 10 auf.

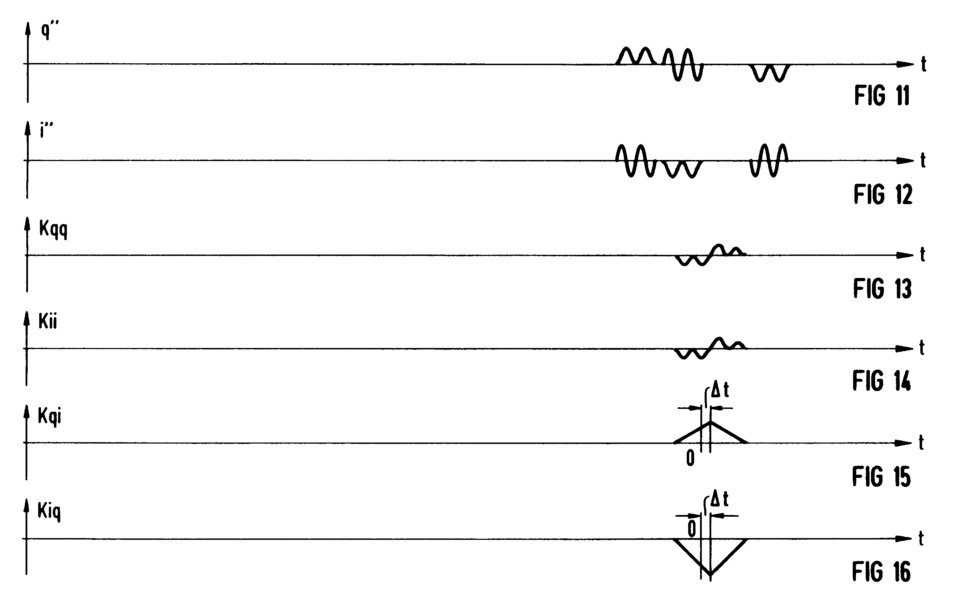

Die um die Pulswiederholzeit Tr verschobenen Mischprodukte q'' und i'' des ersten Echosignals E1 sind in FIG 11 bzw. FIG 12 dargestellt.

Die FIG 13 bis 16 zeigen für den Genzfall unendlich langer Beobachtungszeit (Mittelung, Kreuzleistungsanteil zu Null gesetzt) die verschiedenen Korrelationsfunktionen der ungefilteren Quadraturkomponente i'' und q'' zweier aufeinander folgender Echosignale in einer Umgebung der Pulswiederholzeit Tr.

FIG 13 zeigt die Autokorrelationsfunktion Kqq der Quadratur-Komponente q'' und FIG 14 die Autokorrelationsfunktion Kii der Inphase-Komponente i'' der Echosignale E1 und E2 zweier aufeinanderfolgender Sendeimpulse S1 und S2.

Die wellenförmigen Autokorrelationfunktionen Kqq und Kii entstehen, weil die Oberwellen der Sendeschwingung nicht unterdrückt wurden. Mit Berücksichtigung der Tiefpässe 14 und 16 in FIG 1 ergäbe sich hier Null. Das entspricht einem Wert des Arcustangens von + 90° oder - 90° und dem Argument des Arcustangens von Unendlich bzw. minus Unendlich.

FIG 15 zeigt die Kreuzkorrelationsfunktion Kqi und FIG 15 die Kreuzkorrelationsfunktion Kiq der Quadratur-Komponente q'' und der Inphase-Komponete i'' der Echosignale E1 und E2.

7

Man findet abhängig von der Geschwindigkeit in wechselnden Korrelationen Kqq, Kii, Kqi oder Kiq eine Dreiecksfunktion als Einhüllende des Ergebnisses der direkten Korrelationen. Bei der den FIG 13 bis 16 zugrunde liegenden Geschwindigkeit der Punktreflektoren findet sich die Dreiecksfunktion der Einhüllenden in den Korrelationsfunktionen Kqi und Kiq. Dieselbe Einhüllende ergibt die Autokorrelation des Sendesingals. Die Verschiebung des Maximums, hier in der Kreuzkorrelation Kqi oder Kiq nach FIG 15 bzw. 16 ist ein Maß für die zurückgelegte Stecke der bewegten Teilchen zwischen zwei Sendeimpulsen S1 und S2 und damit ein Maß für die mittlere Geschwindigkeit der betrachteten Teilchen.

Hier soll jedoch nur der Bereich in dem die auf andere Art ermittelte Strömungsgeschwindigkeit liegt, durch die Zeitverschiebung Δt aus den Korrelationen der demodulierten Signale bestimmt werden. Zwischen der Zeitverschiebung Δt und der mittleren Geschwindigkeit der bewegten Teilchen besteht der Zusammenhang

$$v = \frac{c}{2} \frac{\Delta t}{Tr} \; .$$

Dabei ist c die Schallgeschwindigkeit. Damit ist der Bereich eindeutig festgestellt, in dem der in herkömmlicher Technik bestimmte Geschwindigkeitswert liegen muß.

Die Doppeldeutigkeiten sind so ohne höhere Anforderungen an die Meßgenauigkeit aufgehoben. Beispielsweise tritt die erste Mehrdeutigkeit bei 3,5 MHz Sendefrequenz, was einer Sendefrequenzperiode von T = 286 ns entspricht, bei einer Zeitverschiebung Δt von ca. 70 ns auf. Wenn also die Korrelationsfunktion mit einer Abtastrate von 30 MHz, entsprechend einer Abtastperiode von 33 ns, gebildet wird, dann ist das ausreichend für die Erkennung des Geschwindigkeitsbereichs und technisch durchführbar. Nutzt man die Eindeutigkeit bis k = - 1/2 aus, dann kann mit 15 MHz abgetastet werden.

Die Messung der Zeitverschiebung aus den demodulierten Signalen fügt sich gut in die bestehende Dopplertechnik ein. Üblicherweise wird in der herkömmlichen Dopplertechnik mit 6 MHz digitalisiert, so daß zur Bestimmung der Zeitverschiebung Δt die Abtastfrequenz lediglich verdoppelt werden müßte. Die Schnittstelle für die Digitalisierung kann erhalten bleiben. Eine andere Möglichkeit besteht darin, daß Interpolationswerte aus der schon existierenden Abtastung gebildet und verarbeitet werden. Die Interpolationsmethode hat auch den folgenden Vorteil: Das niederfrequente Signal hat vor der Festzielunterdrückung durch die digitalen Kammfilter 22 und 24 in FIG 1 eine hohe Dynamik. Das erfordert bei der Digitalisierung eine große "Bittiefe" der Analog-Digital-Wandler 18, 20 in FIG 1. Dies ist mit einem "langsamen" Analog-Digital-Wandler von z.B. 6 MHz leichter zu realisieren als mit einem "schnellen" von z.B. 15 MHz.

Wie eine Fehlerbetrachtung der oben beschriebenen Methode ausweist, kann bei einem Doppler-Bildsystem der Meßbereich nur für mehrere Auflösungszellen gemeinsam gebildet werden, weil nur so die notwendige Meßzeit erreicht wird. Bei einstrahligen Mehrtordopplern, wie sie in der inneren Medizin angewendet werden, gilt diese Einschränkung nicht. Da also, wie oben beschrieben, in der Praxis die Zeitverschiebung Δt sehr klein gegen die Breite der Korrelationsfunktionen, die z.B. die 6-fache Sendeperiode beträgt, ist, ist die Unterscheidung von zwei Strömungsfäden unterschiedlicher Geschwindigkeit schwer möglich. Das bedeutet eine niedrige Geschwindigkeitsauflösung. Dies gilt auch für den Fall entgegengerichteter Strömungsgeschwindigkeiten, die z.B. in verwirbelter Strömung um so eher auftreten, je größer das Signaleinzugsgebiet ist. Ein "Nebenmaximum" der Korrelationsfunktionen auf der zu t = 0 gespiegelten Seite kann je nach Stärke zu einer Instabilität der Maximumlokalisation führen. Die Methode ist also vorzugsweise bei kleinem Signaleinzugsgebiet einsetzbar, so daß die Wahrscheinlichkeit klein ist, stark unterschiedliche Geschwindigkeiten zu erfassen.

Dennoch erscheint es bei ensprechend langer Meßzeit, d.h. für Einstrahldoppler und bei hoher Genauigkeit der Zeitmessung sinnvoll, eine Verbreiterung der Korrelationsfunktion zu erfassen. Eine Verbreiterung der Einhüllenden der Korrelationsfunktionen gemäß den Figuren 13 bis 16 ist zu erwarten, wenn viele unterschiedliche Geschwindigkeiten gleichzeitig erfaßt werden. Die Verbreiterung kann als Maß für die Strömungsverwirbelung aufgefaßt werden und die Messung der Streuung des Dopplerspektrums für die Bereiche k größer als 1/2, also im Bereich der Mehrdeutigkeiten, ersetzen oder ergänzen. Entweder stellt man die Korrelationfunktion selbst dar oder bildet eine Maßzahl für die Verbreiterung. Die Messung der Verbreiterung σ kann nach den folgenden Gleichungen

$$\sigma = \frac{\int_{-TB}^{TB} t^2 \, \text{Kii} \, (\text{Tr}+t) \, dt}{\int_{-TB}^{TB} \text{Kii} \, (\text{Tr}+t) \, dt} - (\Delta t)^2$$

$$\text{und } \Delta\sigma = \sigma - \sigma_c ,$$

dabei ist $\sigma_o$ die "Streuung" der Einhüllenden der Autokorrelationsfunktion des Sendeimpulses erfolgen. Die Gleichungen entsprechen formal denen für die Auswertung des Dopplerspektrums. Diese Meßvorschrift kann hier entweder für die vom Umschalter 60 ausgewählte Funktion oder die von der Additionsschaltung 62 gelieferte Summe der beiden Funktionen angewendet werden.

**Patentansprüche**

1. Verfahren zur Vermeidung von Mehrdeutigkeiten bei einem Pulsdopplergerät, bei dem
   - periodisch mit einer Pulswiederholzeit (Tr) Sendeimpulse in ein Gebiet mit bewegten Teilchen gesendet werden,
   - die empfangenen Echosignale aus diesem Gebiet in ihre Quadraturkomponenten zerlegt werden,
   - die Quadraturkomponenten so tiefpaßgefiltert werden, daß sie nur noch das Spektrum einer Pulseinhüllenden der Echosignale enthalten,
   - die tiefpaßgefilterten Quadratursignale nach einer Digitalisierung digital weiterverarbeitet werden,
   - von einer der Quadraturkomponenten der Echosignale die Autokorrelationsfunktion und von beiden Quadraturkomponenten eine Kreuzkorrelationsfunktion (Kiq) an der Stelle der Verschiebung um die Pulswiederholzeit (Tr) gebildet wird,
   - aus den Korrelationsfunktionswerten an der Stelle der Verschiebung um die Pulswiederholzeit (Tr) die mehrdeutige mittlere Doppler-Kreisfrequenz als Maß für die mittlere Geschwindigkeit der bewegten Teilchen bestimmt wird,
   **dadurch gekennzeichnet,** daß
   - zusätzlich die Autokorrelationsfunktion einer der Quadraturkomponenten und eine Kreuzkorrelationsfunktion der beiden Quadraturkomponenten in einer Umgebung der Pulswiederholzeit (Tr) gebildet werden, wobei die Umgebung mindestens die doppelte Impulslaufzeit umfaßt, die ein Impuls benötigt, um die Strecke zu durchlaufen, die von einem Teilchen mit der zu messenden Maximalgeschwindigkeit zurückgelegt wird, daß
   - die Verschiebung ($\Delta t$) des Maximums einer oder beider Korrelationsfunktionen in Bezug auf die Pulswiederholzeit (Tr) bestimmt wird, daß
   - aus der Verschiebung ($\Delta t$) des Maximums ein Frequenzbereich für die mittlere Dopplerfrequenz festgelegt wird und daß
   - derjenige Wert von der mehrdeutigen mittleren Dopplerfrequenz ausgewählt und einer weiteren Signalverarbeitung zugeführt wird, der in einem Frequenzbereich liegt, der durch die Verschiebung ($\Delta t$) des Maximums vorgegeben ist.

2. Verfahren nach Anspruch 1, **dadurch gekennzeichnet,** daß die Verschiebung ($\Delta t$) des Maximums derjenigen Korrelationsfunktion bestimmt wird, deren Funktionswert an der Stelle der Verschiebung um die Pulswiederholzeit (Tr) am größten ist.

3. Verfahren nach Anspruch 1, **dadurch gekennzeichnet,** daß die Verschiebung ($\Delta t$) des Maximums aus der Summe der Absolutwerte der beiden Korrelationsfunktionen bestimmt wird.

4. Verfahren nach einem der Ansprüche 1 bis 3, **dadurch gekennzeichnet,** daß die Echosignale so breitbandig in ihre Quadraturkomponenten zerlegt werden, daß das Spektrum der Echosignale der einzelnen Sendeimpulse im wesentlichen erhalten bleibt.

5. Verfahren nach einem der Ansprüche 1 bis 4, **dadurch gekennzeichnet,** daß die Sendeimpulse Ausschnitte von mehreren Perioden einer sinusförmigen Schwingung darstellen.

6. Verfahren nach Anspruch 5, **dadurch gekennzeichnet,** daß bei der breitbandigen Demodulation nach dem Mischen des Echosignals mit einem sinus- und cosinusförmigen Signal, dessen Frequenz gleich der Frequenz des Sendesignals ist, die Quadraturkomponenten so tiefpaßgefiltert werden, daß sie nur noch das Spektrum der Pulseinhüllenden enthalten, so daß die Sendefrequenz und höhere Harmonische davon unterdrückt sind.

7. Verfahren nach einem der Ansprüche 1 bis 6, **dadurch gekennzeichnet,** daß die digitalisierten Quadratursignale von den Festzielechos befreit werden.

8. Verfahren nach Anspruch 7, **dadurch gekennzeichnet,** daß die von den Festzielechos befreiten Quadratursignale in eine Anzahl von zeitlich hintereinander liegenden Signalausschnitten eingeteilt werden, wobei die Anzahl der Signalausschnitte einer Anzahl von Signaleinzugsgebieten entspricht, und daß die einzelnen Signalausschnitte in parallelen Kanälen weiterverarbeitet werden.

9. Verfahren nach einem der Ansprüche 1 bis 8, **dadurch gekennzeichnet,** daß die Sendeimpulse Ultraschallimpulse sind.

10. Pulsdopplergerät zur Durchführung des Verfahrens nach einem der Ansprüche 1 bis 9 mit
    - einem Sender (6), der periodisch mit einer Pulswiederholzeit (Tr) Sendeimpulse in ein Gebiet mit bewegten Teilchen sendet,
    - einem Empfänger (6) mit einem Demodulator (10,12), der die empfangenen Echosignale aus diesem Gebiet in ihre Quadraturkomponenten (i'', q'') zerlegt,
    - zwei Tiefpaßfilter (14,16), die mit dem Demodulator verbunden sind und die die Quadraturkomponenten (i'', q'') so filtern, daß sie nur noch das Spektrum der Pulseinhüllenden enthalten, so daß die Sendefrequenz und höhere Harmonische davon unterdrückt sind,
    - zwei mit den Tiefpässen (14,16) verbundenen Analog-Digital-Wandlern (18,20), die die tiefpaßgefilterten Quadraturkomponenten (i',q') digitalisieren,
    - zwei mit den Analog-Digital-Wandlern (18,20) verbundenen Filter (22,24), die die digitalisierten Quadratursignale von den Festzielechos befreien,
    - zwei mit den Tiefpaßfiltern verbundenen Bereichstoren (26, 28), die Signalausschnitte der Ausgangssignale der Filter auf parallele Doppler-Auswertungsschaltungen (30) verteilen, wobei die Signalausschnitte Signaleinzugsgebieten im Gebiet mit bewegten Teilchen entsprechen,
    **dadurch gekennzeichnet,** daß
    - jede Doppler-Auswertungsschaltung zwei Korrelierer (38,40) umfaßt, die die Autokorrelationsfunktion einer der Quadraturkomponenten (Kii(Tr + t)) und eine Kreuzkorrelationsfunktion (Kiq(Tr + t)) der beiden Quadraturkomponenten in einer Umgebung der Verschiebung um die Pulswiederholzeit (Tr) bestimmen, wobei die Umgebung (Tr + t) mindestens die doppelte Impulslaufzeit umfaßt, die ein Impuls benötigt, um die Strecke zu durchlaufen, die von einem Teilchen mit der zu messenden Maximalgeschwindigkeit zurückgelegt wird, daß
    - die Korrelierer (38,40) jeweils mit einem Mittelwertbildner (42,44) verbunden sind, der die Korrelationsfunktionen (Kii(Tr + t),Kiq(Tr + t)) mehrerer Sendeimpulse mittelt, daß
    - die Mittelwertbildner (42,44) jeweils mit einer Auswahlschaltung (46,48) verbunden sind, die von den gemittelten Korrelationsfunktionen den Wert an der Stelle der Verschiebung um die Pulswiederholzeit (Tr) auswählen, daß
    - jeweils eine Verschiebungsbestimmungsschaltung (55) mit den Mittelwertbildnern (42,44) verbunden ist, die die Verschiebung des Maximums ($\Delta$t) einer oder beider Korrelationsfunktionen gegenüber der Pulswiederholzeit (Tr) bestimmt, und daß
    - eine Bereichsbestimmungsschaltung (61) mit der Verschiebungsbestimmungsschaltung (55) verbunden ist, die aus der Verschiebung des Maximums ($\Delta$t) den Bereich (Bn) festlegt, innerhalb dessen ein Wert der aus den Signalen der Auswahlschaltungen (46,48) bestimmten Vielzahl von möglichen Werten der mittleren Dopplerkreisfrequenz ($\bar{\omega}$) liegt, wobei der so bestimmte Wert einer weiteren Signalverarbeitung zugeführt wird.

11. Pulsdopplergerät nach Anspruch 10, **dadurch gekennzeichnet,** daß die Verschiebungsbestimmungsschaltung (55) einen Umschalter (56) umfaßt, der von derjenigen Korrelationsfunktion die Verschiebung

des Maximums (Δt) bestimmt, deren Wert an der Stelle der Verschiebung um die Pulswiederholzeit (Tr) am größten ist.

**12.** Pulsdopplergerät nach Anspruch 10, **dadurch gekennzeichnet,** daß die Verschiebungsbestimmungsschaltung (55) eine Additionsschaltung (62) umfaßt, die die Summe der Korrelationsfunktionen (Kii-(Tr + t,Kiq(Tr + t)) bildet, wobei von der Summe die Verschiebung des Maximums (Δt) bestimmt wird.

**13.** Pulsdopplergerät nach einem der Ansprüche 10 bis 12, **dadurch gekennzeichnet,** daß die Mittelwertbildner (42,44) aus Summieren bestehen, die die zu mittelnden Korrelationsfunktionen summieren und die Summen zur weiteren Verarbeitung ausgeben.

**Claims**

1.  A method of avoiding ambiguities in a pulse Doppler device wherein
    - periodically with a pulse repetition time (Tr) transmission pulses are transmitted into a region having moving particles,
    - the received echo signals from this region are resolved into their quadrature components,
    - the quadrature components are low-pass-filtered in such manner that they only contain the spectrum of a pulse envelope of the echo signals,
    - the low-pass-filtered quadrature signals, after digitalization, are further processed in digital form,
    - the auto-correlation function is formed from one of the quadrature components of the echo signals and a cross-correlation function (Kiq) is formed from both of the quadrature components at the location of the shift by the pulse repetition time (Tr),
    - the ambiguous, mean Doppler radian frequency is determined from the correlation function values at the location of the shift by the pulse repetition time (Tr) as a gauge of the mean velocity of the moving particles,
    characterised in that
    - in addition, the auto-correlation function of one of the quadrature components and a cross-correlation function of both of the quadrature components are formed in a range surrounding the pulse repetition time (Tr), where the surrounding range comprises at least double the pulse travel time required by a pulse to cover the distance traversed by a particle with the maximum velocity to be measured, that
    - the shift (Δt) of the maximum of one or both of the correlation functions with reference to the pulse repetition time (Tr) is determined, that
    - from the shift (Δt) of the maximum, a frequency range for the mean Doppler frequency is defined and that the value which lies in a frequency range defined by the shift (Δt) of the maximum is selected from the ambiguous, mean Doppler frequency and supplied for further signal processing.

2.  A method according to Claim 1, characterised in that the shift (Δt) in the maximum of that correlation function whose function value is the greatest at the location of the shift by the pulse repetition time (Tr) is determined.

3.  A method according to Claim 1, characterised in that the shift (Δt) in the maximum is determined from the sum of the absolute values of the two correlation functions.

4.  A method according to one of Claims 1 to 3, characterised in that the echo signals are resolved into their quadrature components over such a broad band that the spectrum of the echo signals of the individual transmission pulses is essentially maintained.

5.  A method according to one of Claims 1 to 4, characterised in that the transmission pulses represent portions of a plurality of periods of a sinusoidal oscillation.

6.  A method according to Claim 5, characterised in that in the broad-band demodulation, following the mixing of the echo signal with a sinusoidal and cosine-shaped signal whose frequency is equal to the frequency of the transmission signal, the quadrature components are low-pass-filtered in such manner that they only contain the spectrum of the pulse envelopes, so that the transmission frequency and higher harmonics thereof are suppressed.

7. A method according to one of Claims 1 to 6, characterised in that the digitalized quadrature signals are freed of the permanent echoes.

8. A method according to Claim 7, characterised in that the quadrature signals freed of the permanent echoes are divided into a number of chronologically consecutive signal portions, where the number of the signal portions corresponds to a number of signal catchment zones and that the individual signal portions are further processed in parallel channels.

9. A method according to one of Claims 1 to 8, characterised in that the transmission pulses are ultrasonic pulses.

10. A pulse Doppler device for the implementation of the method according to one of Claims 1 to 9, with
   - a transmitter (6) which periodically, with a pulse repetition time (Tr), transmits transmission pulses into a region with moving particles,
   - a receiver (6) with a demodulator (10, 12) which resolves the received echo signals from this region into their quadrature components (i'', q''),
   - two low-pass-filters (14, 16) which are connected to the demodulator and filter the quadrature components (i'', q'') in such manner that they only contain the spectrum of the pulse envelopes, so that the transmission frequency and higher harmonics thereof are suppressed,
   - two analogue-digital converters (18, 20) which are connected to the low-pass filters (14, 16) and which digitalize the low-pas-filtered quadrature components (i', q'),
   - two filters (22, 24) which are connected to the analogue-digital converters (18, 20) and which free the digitalized quadrature signals of the permanent echoes,
   - two region gates (26, 28) which are connected to the low-pass filters and which distribute the signal portions of the output signals of the filters between parallel Doppler analysis circuits (30), where the signal portions correspond to signal catchment zones in the region with moving particles,
   characterised in that
   - each Doppler analysis circuit comprises two correlators (38, 40) which determine the auto-correlation function of one of the quadrature components (Kii(Tr + t) and a cross-correlation function (Kiq(Tr + t) of both of the quadrature components in a range surrounding the shift by the pulse repetition time (Tr), where the surrounding range (Tr + t) comprises at least double the pulse travel time required by a pulse to cover the distance traversed by a particle with the maximum velocity to be measured, that
   - the correlators (38, 40) are in each case connected to an averaging device (42, 44) which averages the correlation functions (Kii(Tr + t), Kiq(Tr + t) of a plurality of transmission pulses, that
   - the averaging devices (42, 44) are in each case connected to a selector circuit (46, 48) which, from the averaged correlation functions, selects the value at the location of the shift by the pulse repetition time (Tr), that
   - a shift determining circuit (55) is in each case connected to the averaging devices (42, 44), which shift determining circuit (55) defines the shift of the maximum ($\Delta$t) of one or both of the correlation functions with reference to the pulse repetition time (Tr) and that
   - a region determining circuit (61) is connected to the shift determining circuit (55), which region determining circuit (61) defines, from the shift of the maximum ($\Delta$t), the region (Bn) within which lies a value of the plurality of possible values of the mean Doppler radian frequency ($\overline{\omega}$) determined from the signals of the selector circuits (46, 48), where the thus defined value is supplied for further signal processing.

11. A pulse Doppler device according to Claim 10, characterised in that the shift determining circuit (55) comprises a change-over switch (56) which determines the shift of the maximum ($\Delta$t) from that correlation function whose value is the greatest at the location of the shift by the pulse repetition time (Tr).

12. A pulse Doppler device according to Claim 10, characterised in that the shift determining circuit (55) comprises an addition circuit (62) which forms the sum of the correlation functions (Kii(Tr + t), Kiq-(Tr + t)), where the shift of the maximum ($\Delta$t) is determined from the sum.

EP 0 447 597 B1

**13.** A pulse Doppler device according to one of Claims 10 to 12, characterised in that the averaging devices (42, 44) consist of adders which add the correlation functions to be averaged and output the sums for further processing.

**Revendications**

**1.** Procédé pour éviter des ambiguités dans un appareil Doppler à impulsions, selon lequel
- les impulsions d'émission sont émises périodiquement avec une période (Tr) de récurrence des impulsions, dans une région contenant des particules en mouvement,
- les signaux d'échos reçus provenant de cette région sont décomposés en leurs composantes en quadrature,
- les composantes en quadrature sont soumises à un filtrage passe-bas de telle sorte qu'elles ne contiennent encore que le spectre d'une enveloppe des impulsions des signaux d'échos,
- les signaux en quadrature filtrés selon un filtrage passe-bas sont soumis, après une numérisation, à un traitement numérique ultérieur,
- la fonction d'autocorrélation est formée à partir de l'une des composantes en quadrature et une fonction de corrélation croisée (Kiq) est formée à partir des deux composantes en quadrature, à l'emplacement du décalage égal à la durée (Tr) de récurrence des impulsions,
- la fréquence angulaire Doppler moyenne ambiguë est déterminée à partir des valeurs de la fonction de corrélation, à l'emplacement du décalage égal à la durée (Tr) de récurrence des impulsions, en tant que mesure de la vitesse moyenne des particules en mouvement,
caractérisé par le fait que
- en outre, la fonction d'autocorrélation de l'une des composantes en quadrature et la fonction de corrélation croisée des deux composantes en quadrature sont formées dans un environnement de la durée (Tr) de récurrence des impulsions, l'environnement comprenant au moins le double de la durée de propagation, dont a besoin une impulsion pour parcourir la section qui est parcourue par une particule avec la vitesse maximale devant être mesurée,
- que le décalage (Δt) du maximum d'une ou des deux fonctions de corrélation par rapport à la durée (Tr) de récurrence des impulsions est déterminé,
- qu'une gamme de fréquences pour la fréquence Doppler moyenne est déterminée à partir du décalage (Δt) du maximum, et
- que la valeur de la fréquence Doppler moyenne ambiguë, qui est située dans une gamme de fréquences qui est prédéterminée par le décalage (Δt) du maximum, est sélectionnée et soumise à un post-traitement des signaux.

**2.** Procédé selon la revendication 1, caractérisé en ce que le décalage (Δt) du maximum de la fonction de corrélation, dont la valeur est maximale à l'emplacement du décalage portant sur la durée (Tr) de récurrence des impulsions, est déterminé.

**3.** Procédé suivant la revendication 1, caractérisé par le fait que le décalage (Δt) du maximum est déterminé à partir de la somme des valeurs absolues des deux fonctions de corrélation.

**4.** Procédé suivant l'une des revendications 1 à 3, caractérisé par le fait que les signaux d'échos sont décomposés en leurs composantes en quadrature, dans un système ayant une largeur de bande telle que le spectre des signaux d'échos des différentes impulsions d'émission reste essentiellement conservé.

**5.** Procédé suivant l'une des revendications 1 à 4, caractérisé par le fait que les impulsions d'émission représentent des parties de plusieurs périodes d'une oscillation sinusoïdale.

**6.** Procédé suivant la revendication 5, caractérisé par le fait que dans le cas de la démodulation à large bande après le mélange du signal d'écho à un signal sinusoïdal et en cosinus, dont la fréquence est égale à la fréquence du signal d'émission, les composantes en quadrature sont soumises à un filtrage passe-bas tel qu'elles ne contiennent encore que le spectre de l'enveloppe des impulsions, de sorte que la fréquence d'émission et les harmoniques supérieurs de cette fréquence sont supprimés.

**7.** Procédé suivant l'une des revendications 1 à 6, caractérisé par le fait que les échos de cibles fixes sont éliminés des signaux numérisés en quadrature.

13

8. Procédé suivant la revendication 7, caractérisé par le fait que les signaux en quadrature, dont sont éliminés les signaux de cible fixes, sont divisés en un certain nombre de parties se succédant dans le temps, le nombre des parties des signaux correspondant à un nombre de régions d'entrée de signaux, et que le traitement des différentes parties des signaux se poursuit dans des canaux parallèles.

9. Procédé suivant l'une des revendications 1 à 8, caractérisé par le fait que les impulsions d'émission sont des impulsions ultrasonores.

10. Appareil Doppler à impulsions pour la mise en oeuvre du procédé suivant l'une des revendications 1 à 9 comportant
    - un émetteur (6), qui émet périodiquement les impulsions d'émission dans une région comportant des particules en mouvement, avec une durée (Tr) de récurrence des impulsions,
    - un récepteur (6) comportant un démodulateur (10,12), qui décompose les signaux d'écho reçus provenant de cette région, en leurs composantes en quadrature (i'',q''),
    - deux filtres passe-bas (14,16), qui sont reliés au démodulateur et filtrent les composantes en quadrature (i'', q'') de telle sorte qu'ils contiennent encore uniquement le spectre de l'enveloppe des impulsions, en sorte que la fréquence d'émission et les harmoniques supérieurs de cette fréquence sont éliminés,
    - deux convertisseurs analogique/numérique (10,20) reliés aux filtres passe-bas (14,16) et qui numérisent les composantes en quadrature (i',q') soumises au filtrage passe-bas,
    - deux filtres (22,24), qui sont reliés aux convertisseurs analogique/numérique (18,20) et qui éliminent les signaux en quadrature numérisés des échos de cibles fixes,
    - deux portes (26,28) de transmission de gammes, qui sont reliées aux filtres passe-bas et répartissent les parties des signaux de sortie des filtres entre des circuits d'évaluation Doppler parallèles (30), les parties des signaux correspondant à des zones d'entrée des signaux dans la région comportant des particules déplacées,
    caractérisé par le fait que
    - chaque circuit d'évaluation Doppler comporte deux corrélateurs (38,40), qui déterminent la fonction d'autocorrélation de l'une des composantes en quadrature (Kii(Tr + t)) et une fonction de corrélation croisée (Kiq(Tr + t)) des deux composantes en quadrature dans un environnement du décalage portant sur la durée (Tr) de récurrence des impulsions, l'environnement (Tr + t) comprenant au moins le double de la durée de transit dont a besoin une impulsion pour parcourir la section qui est parcourue par une particule possédant la vitesse maximale devant être mesurée,
    - que les corrélateurs (38,40) sont reliés respectivement à un dispositif (42,44) de formation de la valeur moyenne, qui forme la moyenne des fonctions de corrélation (Kii(Tr + t), Kiq(Tr + t)) de plusieurs impulsions d'émission,
    - que les dispositifs (42,44) de formation de la valeur moyenne sont reliés à des circuits de sélection respectifs (46,48), qui sélectionnent, dans les fonctions de corrélation moyenne, la valeur à l'emplacement du décalage égal à la durée (Tr) de récurrence des impulsions,
    - que respectivement un circuit (55) de détermination du décalage est relié aux dispositifs (42,44) de formation de la valeur moyenne, qui déterminent le décalage du maximum ($\Delta$t) de l'une ou des deux fonctions de corrélation par rapport à la durée (Tr) de récurrence des impulsions, et
    - qu'un circuit (61) de détermination de gammes est relié au circuit de détermination de décalage (55), qui fixe, à partir du décalage du maximum ($\Delta$t), la gamme (Bn), dans laquelle une valeur faisant partie de la multiplicité, déterminée par les signaux des circuits de sélection (46, 48), de valeurs possibles de la fréquence angulaire Doppler moyenne ($\bar{\omega}$), la valeur ainsi déterminée étant soumise à un traitement ultérieur des signaux.

11. Appareil Doppler à impulsions suivant la revendication 10, caractérisé par le fait que le circuit de détermination de décalage (55) comporte un commutateur (56), qui détermine le décalage du maximum ($\Delta$t), pour la fonction de corrélation, dont la valeur est maximale à l'emplacement du décalage égal à la durée (Tr) de récurrence des impulsions.

12. Appareil Doppler à impulsions suivant la revendication 10, caractérisé par le fait que le circuit de détermination de décalage (55) comporte un circuit additionneur (62), qui forme la somme des fonctions de corrélation (Kii(Tr + t), Kiq(Tr + t)), le décalage du maximum ($\Delta$t) étant déterminé à partir de la somme.

14

**13.** Appareil Doppler à impulsions suivant l'une des revendications 10 à 12, caractérisé par le fait que les dispositifs (42,44) de formation de la valeur moyenne sont constitués par des additionneurs, qui additionnent les fonctions de corrélation, dont la moyenne doit être formée, et délivrent les sommes en vue de leur traitement ultérieur.

FIG 1

FIG 2

FIG 3

EP 0 447 597 B1

EP 0 447 597 B1

S1

P1 ≈ T E1

Δt E2

S2

τ

P2

P3

T

Tr

τ + Tr P1 P2 P3

**FIG 4**

E1 (t - Tr)

t

**FIG 5**

K

Δt

0

t

**FIG 6**

τz

τz + τΔz

τz

τz + τΔz

t

**FIG 7**

τz

τz + τΔz

τz

τz + τΔz

t

**FIG 8**

q''

t

**FIG 9**

i''

t

**FIG 10**

q″          t     FIG 11

i″          t     FIG 12

Kqq          t     FIG 13

Kii          t     FIG 14

Kqi    $\Delta t$          t     FIG 15

Kiq    $\Delta t$          t     FIG 16

EP 0 447 597 B1